# EUROPEAN PATENT SPECIFICATION

(11) **EP 4 080 080 B1**
(45) Date of publication and mention of the grant of the patent: **27.11.2024**
(21) Application number: 21170263.4
(22) Date of filing: 23.04.2021
(51) Int. Cl.: B60T 13/22, B60T 13/26, F16D 59/02, F16D 65/18, F16D 65/22, F16D 65/28, F16D 65/62, F16D 125/60, F16D 125/64, F16D 125/66, F16D 125/68, F16D 127/06

(54) **BRAKING SYSTEM FOR A COMMERCIAL VEHICLE, METHOD FOR APPLYING A BRAKING FORCE AND COMMERCIAL VEHICLE**
BREMSSYSTEM FÜR EIN NUTZFAHRZEUG, VERFAHREN ZUM ANWENDEN EINER BREMSKRAFT UND NUTZFAHRZEUG
SYSTÈME DE FREINAGE POUR UN VÉHICULE UTILITAIRE, PROCÉDÉ D'APPLICATION D'UNE FORCE DE FREINAGE ET VÉHICULE UTILITAIRE

(43) Date of publication of application: 26.10.2022
(73) Proprietor: KNORR-BREMSE Systeme für Nutzfahrzeuge GmbH, 80809 München (DE)
(72) Inventor: HOLLOSI, Mate, 1097 Budapest (HU); KLINGNER, Matthias, 82275 Emmering (DE); BLESSING, Michael, 80687 München (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langwied (DE); STANKOVIC, Dordo, 81929 München (DE); SZABO, Janos, 1042 Budapest (HU); KOKREHEL, Csaba, 1119 Budapest (HU); HÖS, Levente, 1047 Budapest (HU); MONORI, Gyula, 6065 Lakitelek (HU); KRÜGER, Sven Philip, 81476 München (DE); SCHÖPFBERGER, Tobias, 84048 Mainburg (DE)

(56) References cited:
- EP-A1- 1 529 706
- DE-A1- 102013 110 951
- DE-A1- 102017 123 266
- DE-T2- 69 807 997
- US-A- 3 393 774
- US-A1- 2008 036 289

## Description

The present invention relates to a braking system for a commercial vehicle, a method for applying a braking force and a respective commercial vehicle.

Commercial vehicles, like trucks, tractor units or trailers, comprise braking systems capable of applying braking forces to axles or wheels to decelerate the commercial vehicles during a driving operation or to secure the commercial vehicles against an unintended movement during non-driving operations. Such braking systems and respective brake actuators are arranged near the axle or wheel to be decelerated or secured. However, the installation space near the axle or wheel is limited.

US 3 393 774 A relates to a brake system particularly adapted for use on commercial vehicles. The system utilizes a primary motor to actuate the brakes under ordinary highway operating conditions and a secondary motor to actuate the brakes under emergency or other extraordinary conditions and for parking purposes. Typically each of the actuating motors comprises what is termed in the art an air pot. The secondary air pot is operably connected to the brake mechanism by means of a cable slidably contained in a flexible but longitudinally substantially incompressible housing or sheath.

DE 698 07 997 T2 relates to a braking system comprising a mobile element, which is fixed to the wheel and a static element, which is fixed to the vehicle. The active braking element acts on the static element to promote the clamping of the static and mobile elements, to produce the braking effect. The braking effect can be produced, as required, by the action of the driver on the pedal. The braking effect can also be produced, by the same action of clamping, continuously, by the action of the parking brake. The parking brake action consists of a controller, which produces a mechanical locking effect, by fitting into the location housing on the control rod of the active braking element, to lock the static and mobile elements in the clamped position.

US 2008/036289 A1 relates to a tubular vehicle axle including a primary air brake actuator within the axle. A tubular wall of the axle defines a pressure vessel of the primary actuator. The primary actuator has an output axis coincident with a rotary axis of the axle. An auxiliary air actuator can be directly operable on the primary actuator.

DE 10 2013 110951 A1 relates to a mobile work machine, in particular an industrial truck, with at least one brake, in which a brake rotor disk to be braked is braked with non-rotating friction elements which are actuated via a pressure piston of at least one hydraulic cylinder. The hydraulic cylinder is connected to a brake actuating device via a first hydraulic brake circuit.

DE 10 2017 123266 A1 relates to a mechanical brake device, which is connectable to a brake member. Furthermore, the braking device is provided with at least one first actuating drive, which is non-self-locking in at least one area and has a drive side and an output side, and at least one second actuating drive which is self-locking in at least one area and has a drive side and an output side.

EP 1 529 706 A1 relates to a vehicle parking brake system pneumatically actuating an air cylinder to mechanically lock a wheel brake in an applied position in response to a parking demand request. The air cylinder includes an extendable shaft that supports a lock member.

Accordingly, it is an object of the present invention to provide a braking system for a commercial vehicle, a method for applying a braking force and a respective commercial vehicle allowing a reduced installation space.

The object is solved by a braking system for a commercial vehicle according to claim 1, a method for applying a braking force according to claim 14 and a commercial vehicle according to claim 15. Further aspects of the present invention are subject of the dependent claims.

The inventive braking system for a commercial vehicle comprises a transfer element movable between at least one braking position to apply a braking force on a brake and a release position, a main brake actuator configured to move the transfer element into the at least one braking position, and a secondary brake actuator configured to move the transfer element into the at least one braking position and/or to hold the transfer element in the at least one braking position.

The transfer element may directly apply a braking force on a brake in the at least one braking position, for example, by comprising a braking member, such as a brake body or brake caliper. Alternatively, the transfer element may indirectly apply a braking force on a brake in the at least one braking position, by actuating a respective braking member. To apply different braking forces to the brake, the transfer element may be moved in different braking positions. Accordingly, the release position of the transfer element is a position, in which no braking force is applied on the brake. The brake may comprise a disc brake and/or a drum brake. The brake may be assigned to at least one wheel or axle.

Further, the transfer element may be moved translationally, e.g. in a moving direction corresponding to its longitudinal axis. Alternatively, the transfer element may be moved rotationally, e.g. pivoted around a pivot to act as tilting lever or the like. As another example, the transfer element may be configured as toggle lever. Preferably, the transfer element comprises a rod, wherein its axis is arranged in parallel to the moving direction or wherein its axis is identical to the moving direction.

Preferably, the main brake actuator or primary brake actuator, respectively, is mainly intended to apply a braking force on the brake via the transfer element during a driving operation. In other words, the main brake actuator primarily actuates the transfer element to be moved in the at least one braking position to adjust a speed of the vehicle. However, the main brake actuator may also be used to secure the vehicle against an unintended movement during a non-driving operation as addressed below. The main brake actuator may be provided by any drive mechanism to allow the transfer element to be moved into the at least one braking position, e.g. by a respective pneumatic, hydraulic, electromechanical or mechanical drive mechanism.

Preferably, the secondary brake actuator is configured to secure the vehicle against an unintended movement during a non-driving operation. Consequently, the at least one braking position of the transfer element is a position to transfer a braking force sufficient for such propose under conventional specifications. However, more than one braking position may be provided to allow an adjustment to different boundary conditions, e.g. cooling-off of the brake, while, for example, considering respective loads on the braking system.

Similar to the main brake actuator, the secondary brake actuator may be configured to move the transfer element into the at least one braking position. Further, the secondary brake actuator may be configured to hold the transfer element in the at least one braking position. However, holding the transfer element in the at least one braking position may also be implemented by a separate locking mechanism. In another variant, the secondary brake actuator may only hold the transfer element in the at least one braking position. For example, the transfer element may be moved in the at least one braking position by the main brake actuator and is than locked or held in such position by the secondary brake actuator. Thus, the secondary brake actuator does not necessarily have to be configured to provide a moving force but only a holding force for the transfer element.

According the braking system of the present invention, both, the main brake actuator and the secondary brake actuator, act on the transfer element. Therefore, separate transfer elements for the main brake actuator und the secondary brake actuator may be omitted resulting in less components and required installation space, respectively.

Further, the secondary brake actuator is connected to the transfer element.

In accordance with the connection of the secondary brake actuator with the transfer element, the secondary brake actuator is - directly or indirectly - in permanent contact with the transfer element. Consequently, any movement of the secondary brake actuator initiates a corresponding movement of the transfer element. To adapt a transfer ratio of such movement, an indirect connection via a gear mechanism may be implemented.

For example, the cable control, in particular the bowden cable, comprised by the secondary brake actuator is connected to the transfer element. When the cable control is tensioned and/or pulled by the secondary brake actuating device, a tensile force acts on the transfer element. Consequently, the transfer element is moved in the operating direction of such tensile force.

Further, the secondary brake actuator comprises a length adjustable portion, preferably a spring portion, configured to be at least partially compressed when the main brake actuator and the secondary brake actuator are activated, and configured to be at least partially decompressed when at least one of the main brake actuator and the secondary brake actuator is deactivated.

With respect to the secondary brake actuator being connected to the transfer element, which is movable by the main brake actuator, a movement of the transfer element in the at least one braking position may not affect the secondary brake actuator due to the length adjustable portion. Therefore, the length adjustable portion acts as length compensation means in such event. For example, the length adjustable portion is provided by a spring portion to be compressed and decompressed. Alternatively or in addition, the length adjustable portion comprises a telescopic mechanism.

In some embodiments, the main brake actuator is configured to move the transfer element in the at least one braking position when activated, and/or the secondary brake actuator is configured to move and/or hold the transfer element in the at least one braking position when deactivated.

An activated state is a state due to an actuation, for example, based on an energization or concrete operation. Accordingly, a deactivated state is a state without any energization or concrete operation. With the main brake actuator configured to move the transfer element in the at least one braking position when activated, the main brake actuator operates as active main brake actuator, e.g. actuating the transfer element by the main brake actuator requires a respective activation. As the main brake actuator is mainly intended to adjust a speed during a driving operation, an active brake concept may avoid unintended braking. On the other hand, with the secondary brake actuator configured as passive brake actuator, it does not necessarily need to be actively actuated during a non-driving operation to secure the commercial vehicle against an unintended movement. For example, an electric commercial vehicle may not provide sufficient power, at least for an unlimited period of time, to keep an active secondary brake actuator in an active state to secure the commercial vehicle. With the use of a passive secondary brake actuator an energization or the like is not required during a non-driving operation, in particular, when the vehicle is in a non-operating state, i.e. turned off. Similarly, any defect with respect to an actuation of the secondary brake actuator does not affect a braking operation by the secondary brake actuator in this context.

Even though further explanations with respect to different embodiments may be directed to a passive secondary brake actuator, the same principles apply vice versa for an active secondary brake actuator with reversed operating mechanisms.

In some embodiments, the secondary brake actuator is actuated by a secondary brake actuating device, preferably, a pre-loaded actuator, in particular by a spring-loaded actuator, comprised by the secondary brake actuating device, wherein the secondary brake actuating device is preferably configured to actuate more than one secondary brake actuator.

Accordingly, the secondary brake actuating device actuates the secondary brake actuator to move the transfer element into the at least one braking position and/or to hold the transfer element in the at least one braking position. For example, a spring-loaded actuator representing an exemplary embodiment of a pre-loaded actuator as secondary brake actuating device may comprise a compression spring. A compression of the compression spring relative to an initial state may correspond to an active state. With a release of the compression, i.e. in a deactivated state, the compression spring releases the previously stored deformation energy and return to its initial state. With respect to the secondary brake actuator configured as passive secondary brake actuator, the secondary brake actuating device thus may actuate the secondary brake actuator to move and/or hold the transfer element in the at least one braking position when deactivated due to the compression spring staying or returning in its initial state. In the given configuration, the secondary brake actuating device thus may actuate the secondary brake actuator to release the transfer element from the at least one braking position to return in the release position when activated due to a compression of the compression spring. In other words, the secondary brake actuator is in an activated state when the spring of the spring-loaded actuator is deformed due to a concrete operation and in a deactivated state when the spring is in its initial state.

However, the secondary brake actuating device is not limited to spring-loaded actuators or pre-loaded actuators, respectively, but may alternatively be provided by other mechanisms configured to actuate the secondary brake actuator, such as levers, sliders, pushing and/or pulling means, cams, wedges, cylinder-piston devices or the like. In principle, the secondary brake actuating device may be understood as any device capable of actuating the secondary brake actuator by pneumatically, hydraulically, electromechanically or mechanically means.

The secondary brake actuating device is not restricted to the actuation of a single secondary brake actuator but may also be configured to actuate more than one secondary brake actuator of the braking system. For example, the braking system comprises a secondary brake actuator and respective transfer element for each wheel or at least each axle. Accordingly, the secondary brake actuating device may be configured to actuate all or at least some of the several secondary brake actuators. The secondary brake actuating device may therefore serve as central secondary brake actuating device. This general principle of a central secondary brake actuating device may also be applicable to other braking systems. Accordingly, any embodiment described herein may be combined with such central brake actuating device irrespective of a transfer element be moved and/or held by the main brake actuator and the secondary brake actuator.

In some embodiments, the secondary brake actuator comprises a cable control, in particular a bowden cable.

A cable control, in particular a bowden cable, represents a flexible element to provide tensile forces when tensioned and/or pulled. As per the above example, a bowden cable as cable control may be tensioned or pulled, respectively, by the spring-loaded actuator as or comprised by the secondary brake actuating device when the spring-loaded actuator is in an initial state, i.e. deactivated. In turn, the tension of the bowden cable is released in an activated state of the spring-loaded actuator. In the event of a passive secondary brake actuator, a deactivated state of the spring-loaded actuator device or a tensioned state of the bowden cable corresponds to a deactivated or passive state of the secondary brake actuator, in which the secondary brake actuator, specifically the bowden cable, moves the transfer element in the at least one braking position and/or holds the transfer element in the at least one braking position. However, the present invention is not restricted to a bowden cable as cable control and the cable control may also represent the use of other cables, ropes and/or pulley mechanisms.

In some embodiments, the length adjustable portion is configured to provide a force corresponding to spring rate R₃, the secondary brake actuator and/or the secondary brake actuating device is or are configured to provide a force corresponding to spring rate R₁, and the main brake actuator is configured to provide a force corresponding to spring rate R₂, wherein R₁ is greater than R₂ and R₂ is greater than R₃.

Since R₁ is greater than R₂ and R₂ is greater than R₃, an activation of the main brake actuator allows the length adjustable portion to be compressed without affecting the secondary brake actuator in an activated state. Further, the length adjustable portion may be decompressed if the secondary brake actuator is deactivated while the movement of the secondary brake actuator may not impeded by the main brake actuator with respect to its spring rate R₂. In a preferred embodiment, the length adjustable portion provides a length in a decompressed state that allows the secondary brake actuator to hold the main brake actuator in a position corresponding to the position of the transfer element in the at least one braking position. Consequently, the transfer element may be moved and/or held in the at least one braking position by the secondary brake actuator acting on the main brake actuator. In other words, the secondary brake actuator may hold the main brake actuator in an activated state when the secondary brake actuator is deactivated.

In some embodiments, the secondary brake actuator comprises a lever mechanism configured to move the transfer element into the at least one braking position and/or to hold the transfer element in the at least one braking position.

Instead of a cable control, in particular a bowden cable, the lever mechanism may comprise at least one rigid body to transfer a force due to a respective movement. However, the lever mechanism does not exclude the cable control from being comprised by the secondary brake actuator. For example, the cable control, in particular the bowden cable, may be used to actuate the lever mechanism. Alternatively or in addition, the lever mechanism may be actuated by actuating means, such as a motor and the like.

The lever mechanism may move and/or hold the transfer element in the at least one braking position due to a rotational and/or translational movement of at least one lever comprised by the lever mechanism. The term lever is not limited a rod-like rigid body but may also comprise other types of control gates or control slides, like eccentric elements or wedges.

In some embodiments, the lever mechanism comprises a lever, in particular a tilting lever or a rotating lever, configured to provide an application of force, preferably centrally, to the transfer element.

The lever, such as a tilting lever or a rotating lever, may provide a pivot with one end extending from the pivot being actuated, for example, by the cable control, and the other end extending in the opposite direction of the pivot acting on the transfer element, when the one end is actuated. Alternatively, the lever may be pivoted around the pivot by a motor.

The tilting lever preferably acts centrally on the transfer element. Accordingly, tilting of the transfer element or at least a respective tilting moment may be avoided or at least reduced.

Alternatively or in addition, the lever mechanism comprises a control slide mechanism, in particular at least two sliders, preferably at least two pivot arms, symmetrically pivotable and/or displaceable, configured to move the transfer element into the at least one braking position and/or to hold the transfer element in the at least one braking position.

The control slide mechanism or control gate mechanism provides a contour to be moved in contact with the transfer element to move the transfer element in the at least one braking position with a further movement beyond the contact position and/or to hold the transfer element in the at least one braking position. Such movement may be a rotational and/or translational movement. The movement may be initiated by a lever, e.g. actuated by a cable control, such as bowden cable, or a motor. To apply a respective force on the transfer element symmetrically, the control slide mechanism may provide two sliders symmetrically moving along an engagement surface of the transfer element, for example, symmetrically moving towards each other. For example, the control slide mechanism comprises two pivot arms each of which attached to a gear wheel. The gear wheels mesh together with one gear wheel driven by, for example, a lever or motor, to simultaneously drive the other gear wheel. As per an exemplary embodiment, the two pivot arms extending from the respective gear wheels may be intended to engage with an end face of the transfer element perpendicular to the moving direction of the transfer element. In an initial state, the pivot arms are arranged opposed to each other in a plane in parallel to the end face of the transfer element. When the driven gear wheel is pivoted to move towards the end face of the transfer element, the other gear wheel is simultaneously driven towards the end face by the driven gear wheel. Accordingly, the force applied to the transfer element by the pivot arms in introduced substantially symmetrically. The lengths of the pivot arms correspond to the required distance to move and/or hold the transfer element in the at least one braking position under consideration of the pivot angle. In turn, the pivot angle may apply different distances. However, pivot angles resulting in an arrangement of the pivot arms substantially perpendicular to the end face in a final position may provide positive effects with respect to forces to be absorbed by the control slide. However, the present invention is not restricted to a control slide mechanism with two sliders but may also provide only one slider or more than two sliders.

Further, the transfer element may provide an enlarged engagement surface. Assuming that the transfer element is a rod-like element with a longitudinal axis in parallel to the moving direction of the transfer element. A respective diameter and therefore an end face may be relatively small. To allow the control slide mechanism to engage with the transfer element at an early stage of movement, e.g. to enhance the moving ability, the engaging surface may be enlarged beyond the diameter extending therefrom in the longitudinal direction. Accordingly, the end face may be formed as a plate-like member extending radially from the diameter. Alternatively, the control slide mechanism may act via a membrane representing an engagement surface on the transfer element. Such indirect application of force or movement, respectively, may be implemented by the membrane being movable or deformable in the moving direction of the transfer element. It is noted that the enlarged engagement surface or a respective arrangement of a membrane is not restricted to an embodiment comprising the control slide mechanism but may also be applied to other embodiments of the braking system.

Alternatively or in addition, the lever mechanism comprises a transmission mechanism configured to convert an initial force initiated by the actuating device in an actuation force to be applied to the transfer element with a transmission ratio of more than one, preferably with a progressively increasing transmission ratio, in particular a toggle lever.

For example, the transmission mechanism, such as a toggle lever, may be used to move and/or hold the transfer in the at least one braking position. Alternatively or in addition, the toggle lever may be applied as actuator to actuate other parts of the secondary brake actuator, such as the afore-mentioned tilting lever or control slide mechanism.

The toggle lever as an exemplary embodiment of the transmission mechanism may provide a progressively increasing force transmission ratio when being progressively actuated. When moving the toggle lever in its dead center or beyond, the latter combined with a mechanical end stop for providing a locking effect, the toggle lever provides a secure holding force. However, a further readjustment beyond such position is impeded. Consequently, if the toggle lever is directly responsible for the movement or holding of the transfer element in the at least one braking position, the toggle lever may not be moved into its dead center. Thus, the toggle lever may still be able to provide a readjustment to readjust the transfer element, for example, due to a cool down effect of the brakes or wear. Alternatively or in addition, such readjustment may be provided by biased components between the toggle lever and the transfer element and/or acting on the toggle lever towards the transfer element.

Alternatively or in addition to the toggle lever, the transmission mechanism may comprise an eccentric mechanism. For example, the eccentric mechanism may be provided by a circular disk rotatable about a pivot axis, which is offset from the center of the circular disk. The transfer element may be moved and/or held in the at least one braking position by the circular disk or a further member coupled thereto, such as an eccentric rod. As another example, the eccentric mechanism may be provided by two circular members or cylindric members, respectively, with different axis. The transmission ratio may be fixedly depending on an axis distance, i.e. the short lever arm, and a swivel angle of the toggle lever.

Alternatively or in addition, the transmission mechanism comprises a cam. Similar to the eccentric mechanism, the cam is configured to transform a rotary motion into a linear motion. However, the cam is not necessarily eccentrically supported by a pivot but transforms a respective motion due to its shape. For example, the cam is provided as a part with one rotational axis. The contour of the cam may be curved to provide a more flexible transmission ratio. A roller may be comprised by the transmission mechanism as counterpart for the cam.

Alternatively or in addition, the transmission mechanism comprises a wedge. The term wedge represents a body with an inclined surface facing the surface of the transfer element to receive a respective force. Moving the wedge in parallel to the surface of the transfer element in a direction, in which the inclination extends, results in different contact points along the inclination. Accordingly, the force applied to the wedge during such movement is converted into a force perpendicular to the inclined surface to move the transfer element. A respective transmission ratio may be achieved by a predetermined inclination. To adapt the inclination and therefore the transmission ratio, the wedge may be pivotably supported to provide different inclination angles.

Alternatively or in addition, the transmission mechanism comprises a ball ramp with variable pitch. A ball received within a ramp of the ball ramp may be placed in contact with a surface of the transfer element to receive a respective force. Since the ramp provides a variable pitch, e.g. a respective inclination, a relative movement between the ball and the ramp causes the ball to project from the ramp towards the receiving surface with a variable projection height. A relative movement may be a rotational movement with a ramp arranged in a circular arc or a translational movement with a straight ramp. Accordingly, the ball ramp is capable of varying the distance between the ball ramp and the transfer element and/or transmitting a respective force to the transfer.

Preferably, the secondary brake actuator comprises or acts on a friction member configured to frictionally engage with the transfer element.

The frictional engagement may at least hold the transfer element in the at least one braking position. Accordingly, the secondary brake actuator or at least the friction member may not necessarily move the transfer element in the at least one braking position but may hold the transfer element after being moved in such position, for example, by the main brake actuator. Therefore, the secondary brake actuator may only be configured to apply a respective holding force.

Alternatively or in addition, the secondary brake actuator comprises or acts on a form-fit member to engage with the transfer element to hold, i.e. lock, the transfer element in the at least one braking position.

In some embodiments, the friction member is configured to provide a frictional engagement with a radial surface of the transfer element with respect to a moving direction of the transfer element.

The radial surface of the transfer element may be relatively insensitive to position tolerances. Accordingly, constructional efforts and complexity may be reduced. The friction member may be biased in the radial direction towards the transfer element to further compensate for tolerances and/or wear.

In some embodiments, an engagement portion of the transfer element for the friction member is inclined with respect to a plane perpendicular to the moving direction of the transfer element and the friction member forms a corresponding wedge surface configured to provide a frictional engagement with the inclined engagement portion of the transfer element.

Due to the wedge surface of the friction member acting on the corresponding inclined engagement portion of the transfer element, the transfer element may be readjusted with respect to a reduced distance between the brake or interposed component and the transfer element due to cooling down of the brake or wear. The readjustment is provided by the wedge surface moved in a radial direction. Such movement may be implemented actively and/or due to respectively biased elements. Further, the wedge surface may also provide a form-fit engagement or may form a mechanical stop, respectively, when the wedge surface engages the inclined engagement portion of the transfer element. In other words, the friction member comprising the wedge surface operates preferably as a blocking part. The inclination of the wedge surface may be configured to realize different blocking positions. Accordingly, different clamping positions with respect to the transfer elements may be provided easily due to the wedge surface.

The secondary brake actuator may comprise the friction member with the wedge surface in addition or alternatively to the friction member solely acting radially.

In another aspect, the present invention relates to a method for applying a braking force to a brake of a commercial vehicle, comprising the steps of activating a main brake actuator to move a transfer element in a braking position to apply the braking force to the brake and holding the transfer element in the braking position by a secondary brake actuator, preferably independent of a further activation of the main brake actuator.

As already apparent from different embodiments described above, the inventive method provides the use of the secondary brake actuator to hold the transfer element in the at least one braking position provided by the main brake actuator. Accordingly, the main brake actuator is not restricted to apply a braking force to the brakes by moving the transfer element in a respective position but also configured to move the transfer element in the at least one braking position during a non-driving operation to be held in such position by the secondary brake actuator even if the main brake actuator is deactivated or released, respectively. The actuation of the main brake actuator to move the transfer element in the at least one braking position during such non-driving operation may be initiated automatically when the secondary brake actuator is actuated to hold the transfer element in the at least one braking position. Alternatively, such actuation may be initiated separately to reduce a risk of an unintended actuation of the main brake actuator.

Another aspect of the present invention relates to a commercial vehicle, in particular an electric driven or hybrid vehicle, comprising a braking system as described above and/or a control device configured to execute the method as described above. Preferably, the vehicle comprises a fuel cell and/or a traction battery.

The vehicle is preferably configured as a truck, a trailer and/or a combination of a towing vehicle and a trailer. Preferably, the vehicle is configured as an electric vehicle, in particular a battery electric or fuel cell electric vehicle, a hybrid or a conventional vehicle.

Respective effects and advantages comply with the effects and advantages already discussed. In particular with respect to electric vehicles, the installation space and weight is a crucial factor. Further, with the secondary brake actuator configured as passive secondary brake actuator, the vehicle may be secured against an unintended movement without any energization required during non-driving operations associated with a de-energized vehicle, for example, due to finally turning off the vehicle or a start-stop-operation during intermediate stops.

Further advantages, aspects and details of the disclosure are subject to the claims, the following description of preferred embodiments applying the principles of the disclosure and drawings. In particular:
**Fig. 1** is a schematic top view of an axle arrangement of a commercial vehicle with a brake system according to an exemplary embodiment;
**Fig. 2** is a schematic view of a braking system according to a first exemplary embodiment;
**Fig. 3** is a schematic view of a braking system according to a concrete design of the secondary brake actuating device of the first exemplary embodiment;
**Fig. 4** is a schematic view of a braking system according to Figure 3 in different operating states of the braking system;
**Fig. 5** is a schematic view of a braking system according to a second exemplary embodiment;
**Fig. 6** is a schematic view of a braking system according to a third exemplary embodiment;
**Fig. 7** is a schematic view of a braking system according to a fourth exemplary embodiment;
**Fig. 8** is a schematic view of a braking system according to a fifth exemplary embodiment; and
**Fig. 9** is a schematic view of a braking system according to a sixth exemplary embodiment.

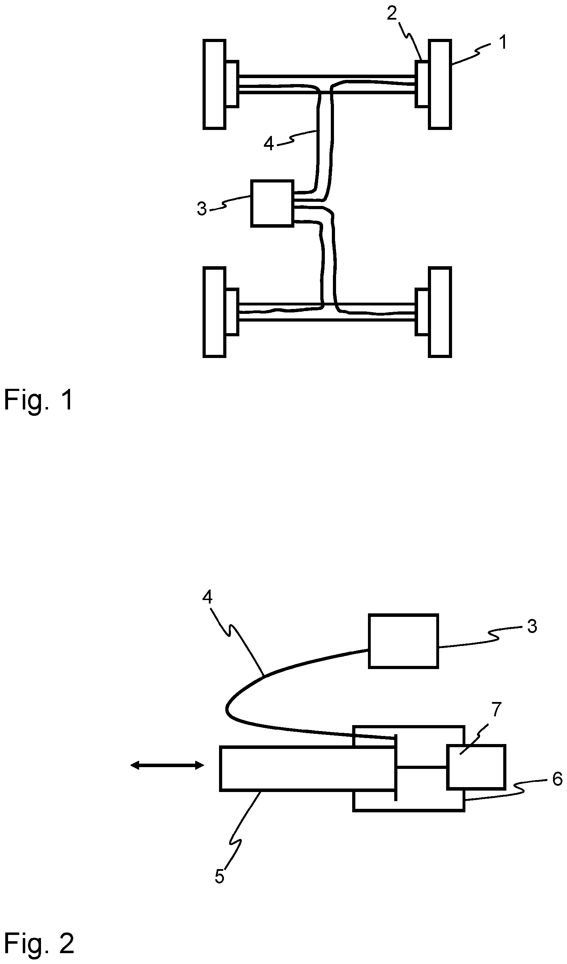

**Fig. 1** shows a schematic top view of an axle arrangement of a commercial vehicle with a brake system according to an exemplary embodiment. Here, two axles are provided with each axle driving two wheels 1. Each of the wheels 1 is provided with a brake 2. In alternative embodiments, the brake may be provided for each axle instead of each wheel 1. To apply a braking force to the brakes 2 by the braking system, the braking system comprises a main brake actuator 7 **(****Fig. 2****)** and a secondary brake actuator 4 for each of the brakes 2. Each of the secondary brake actuators 4 is actuated by a central secondary brake actuating device 3. The central secondary actuating device 3 requires installation space. In particular, the central secondary brake actuating device 3 is displaced from the limited space available near the wheels or brakes, respectively. The braking system comprising the central secondary brake actuating device 3 is a principle concept of the present disclosure that may be applicable to any of the following embodiments and is considered to be combinable with any feature independently. However, in alternative embodiments, each of the secondary brake actuators 4 may be actuated by independent secondary brake actuating devices 3 and/or arranged in the vicinity of the brakes 2.

**Fig. 2** is a schematic view of a braking system according to a first exemplary embodiment. With reference to **Fig. 1****,** the schematic view in **Fig. 2** shows only the braking system for one of the brakes 2 but the same applies for the other brakes 2. However, in alternative embodiments, the concrete design of the different components of the braking system may deviate for each of the brakes in at least one characteristic according to specific boundary conditions and/or design aspects.

The braking system according to the first exemplary embodiment comprises a transfer element 5 movable between at least one braking position to apply a braking force on the respective brake 2 and a release position. Here, the transfer element 5 is a rod-like member with a longitudinal axis aligned with the moving direction, which is indicated by the bidirectional arrow. The transfer element 5 is supported in a housing 6. A movement of the transfer element 5 from the release position into the at least one braking position corresponds to a movement of the transfer element 5 in the moving direction away from the housing 6, that means to the left in the drawing. Accordingly, a movement of the transfer element 5 from the at least one braking position into the release position corresponds to a movement of the transfer element 5 towards the housing 6, that means to the right in the drawing.

The transfer element 5 can be moved in the at least one braking position to apply a braking force on the brake 2 by either the main brake actuator 7 or the secondary brake actuator 4. In the present embodiment, the secondary brake actuator 4 is a cable control, here, a bowden cable, connected to an end face of the transfer element 5 facing the housing 6. However, in alternative embodiments, the secondary brake actuator may be connected somewhere else to the transfer element 5 and cause a respective movement of the transfer element 5. Further, with respect to alternative embodiments, the secondary brake actuator 4 may be configured as electric or hydraulic actuator. The bowden cable is actuated by the secondary brake actuating device 3. In the present embodiment, the secondary brake actuating device 3 causes an actuation of the secondary brake actuator 4 to move the transfer element 5 in the at least one braking position when deactivated. Accordingly, the secondary brake actuator 4 is configured as passive brake actuator. However, in alternative embodiments, the secondary brake actuator may be configured as active brake actuator to be actuated by the secondary brake actuating device to move the transfer element in the at least one braking position when the secondary brake actuating device is activated, i.e. energized.

The main brake actuator 7 is formed as a pneumatically driven cylinder-piston unit in the present embodiment to move the transfer element in the at least one braking position. However, in alternative embodiments, the main brake actuator may be provided by any other drive unit to allow the transfer element 5 to be moved in the at least one braking position, e.g. by a respective pneumatically, hydraulically, electromechanically or mechanically driven actuator. In the present embodiment, the main brake actuator is configured as active brake actuator. Accordingly, the main brake actuator 7 moves the transfer element 5 in the at least one braking position when activated, i.e. energized.

In the present embodiment, the main actuator 7 is controlled to apply a braking force to the respective brake 2 via the respective transfer element 5 during a driving operation to adapt the speed of the commercial vehicle. The secondary brake actuator 4 is controlled to apply a braking force to the respective brake 2 via the respective transfer element 5 during a non-driving operation to avoid an unintended movement of the commercial vehicle, e.g. when the vehicle stands still and is not operated. If the main brake actuator 7 is activated during an actuation of the secondary brake actuator 4 to move the transfer element 5 into the at least one braking position, the secondary brake actuator 4 does not actually move the transfer element 5 but holds the transfer element 5 in such position. Even though the secondary brake actuator 4 or the secondary brake actuating device 3, respectively, of the present embodiment is configured to perform both, a moving and a holding of the transfer element 5, the secondary brake actuator 4 or the secondary brake actuating device 3, respectively, of alternative embodiments may only be configured to provide a respective holding force after the transfer element 5 has been moved in the at least one braking position by the main brake actuator.

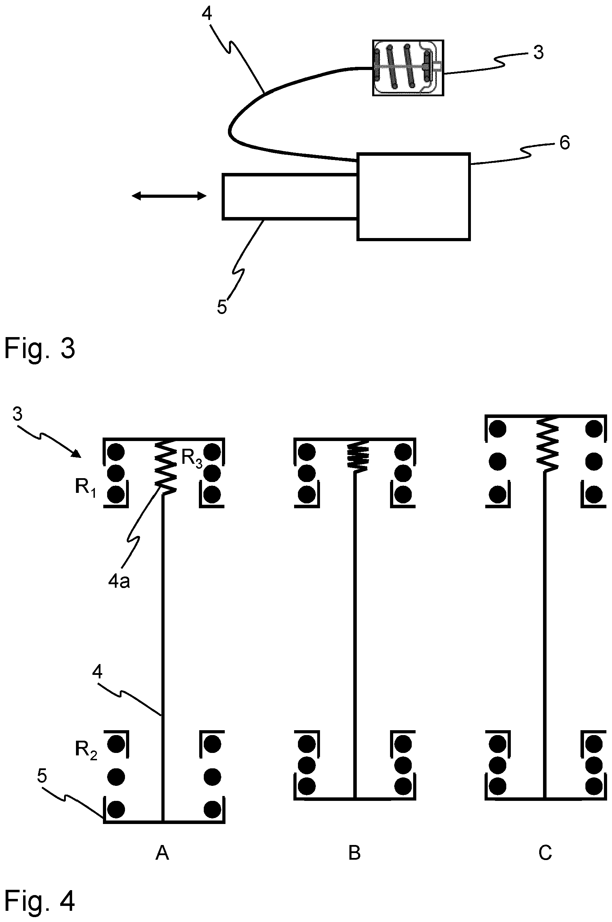

**Fig. 3** is a schematic view of a braking system according to a concrete design of the secondary brake actuating device 3 of the first exemplary embodiment. Here, the secondary brake actuating device 3 comprises a spring-loaded actuator. **Fig. 3** shows the spring-loaded actuator in a deactivated state, i.e. the compression spring of the spring loaded actuator is decompressed. However, in alternative embodiments, the compression spring may not be entirely decompressed in the deactivated state but biased to some extent. The bowden cable is passed through the compression spring and attached at a moveable end plate of the spring-loaded actuator attached to an end of the compression spring facing away from the bowden cable. Consequently, when the spring-loaded actuator is deactivated, the bowden cable is pulled to cause the secondary brake actuator 4 to move or hold the transfer element 5 in the at least one braking position. To release the tension of the bowden cable to allow the transfer element 5 to move into a release position, the compression spring is compressed, i.e. activated, by applying a pneumatic pressure on the moveable end plate from a side facing away from the compression spring. However, in alternative embodiments, the compression spring may be compressed hydraulically, electromechanically or mechanically.

**Fig. 4** is a schematic view of a braking system according to **Fig. 3** in different operating states A, B and C of the braking system. The secondary brake actuator 4 or the bowden cable, respectively, comprises a length adjustable portion 4a, here a compression spring. One end of the secondary brake actuator 4 is connected to the secondary brake actuating device 3, i.e. to the end plate of the spring-loaded actuator in the present embodiment, and the other end of the secondary brake actuator 4 is connected to the transfer element 5. The length adjustable portion 4a is configured to provide a force corresponding to spring rate R₃, the secondary brake actuating device 3 is configured to provide a force corresponding to spring rate R₁, and the main brake actuator 7 is configured to provide a force on the transfer element 5 corresponding to spring rate R₂, wherein R₁ is greater than R₂ and R₂ is greater than R₃.

Operating state A corresponds to a driving operation of the commercial vehicle without applying a braking force by the main brake actuator 7. Accordingly, the lower position of the transfer element 5 in **Fig. 4** corresponds to a release position of the transfer element 5 as per operating state A, while the upper position of the transfer element 5 corresponds to the at least one braking position of the transfer element 5 as per operating states B and C as described later. In operating state A, the main brake actuator is deactivated and the secondary brake actuating device 3 is activated. Since R₂ is greater than R₃, the length adjustable portion 4a is lengthened to such extent that the transfer element 5 is not moved towards the at least one braking position. In other words, the secondary brake actuator provides a sufficient length to allow the transfer element 5 to stay in the release position in operating state A.

Operating state B corresponds to a driving operation of the commercial vehicle, wherein the main brake actuator is activated to apply a braking force by moving the transfer element 5 into the at least one braking position. Since R₂ is greater than R₃ and the secondary brake actuating device 3 is activated to stay in its current compressed state, the length adjustable portion 4a is decompressed or shortened, respectively. Therefore, the length adjustable portion 4a allows the transfer element 5 to be moved in the at least one braking position by the main brake actuator 7 without being hindered by the secondary brake actuator 4 or secondary brake actuating device, respectively, and without affecting the secondary brake actuating device 3.

Operating state C corresponds to a non-driving operation of the commercial vehicle, wherein the secondary brake actuating device 3 is deactivated to move or hold the transfer element 5 in the at least one braking position. Since R₁ is greater than R₂ and R₂ is greater than R₃, the decompression of the compression spring of the spring-loaded actuator representing the secondary brake actuating device 3 causes the length adjustable portion 4a to be lengthened to its maximum length and subsequently the transfer element 5 to be moved or held in the at least one braking position, irrespective of a further activation of the main brake actuator 7. Accordingly, the length of the secondary brake actuator with the length adjustable portion being lengthened to its maximum extent corresponds to the length required to move and/or hold the transfer element 5 in the at least one braking position.

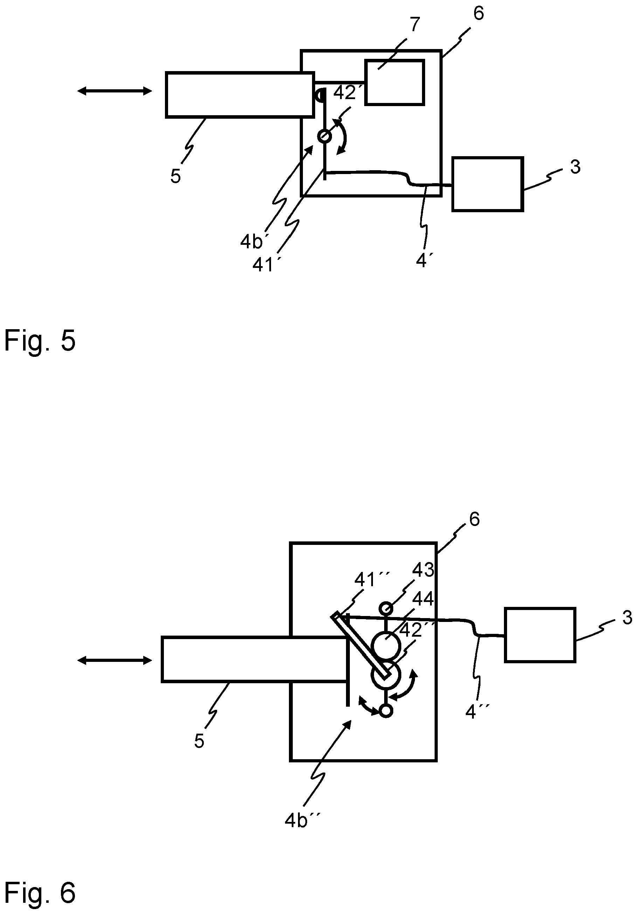

**Fig. 5** is a schematic view of a braking system according to a second exemplary embodiment. The second embodiment mainly differs from the first embodiment in the configuration of the secondary brake actuator and the respective actuation of the transfer element 5. The secondary brake actuator 4'of the second embodiment comprises a lever mechanism 4b' with a tilting lever 41' pivotable around a pivot 42'. One end of the tilting lever 41' extending from the pivot 42' is connected to a bowden cable, which is in turn connected to the secondary brake actuating device 3. The other end of the tilting lever 41' extending from the pivot 42' in the opposite direction is configured to substantially centrally contact an end face of the transfer element 5 in at least some rotational angles. By actuating the bowden cable by the secondary brake actuating device 3 to be pulled in the direction towards the secondary brake actuating device 3 the tilting lever 41' moves and/or holds the transfer element 5 in the at least one braking position.

**Fig. 6** is a schematic view of a braking system according to a third exemplary embodiment. The third embodiment differs from the second embodiment in the configuration of the lever mechanism 4b" and the respective actuation of the transfer element 5. In the third embodiment, the lever mechanism 4b" of the secondary brake actuator 4" comprises two pivot arms 43 each extending from a respective gear wheel 44. The two gear wheels 44 mesh together. The one gear wheel 44 is pivotable around a pivot 42" to simultaneously pivot the other gear wheel 44 as the gear wheels 44 mesh together. The one gear wheel is pivoted by the lever 41 ", which is connected to the secondary brake actuating device 3 by a bowden cable, when the bowden cable is pulled by the secondary brake actuating device 3.

**Fig. 6** shows the pivot arms 43 in an initial state opposed to each other, when the bowden cable is not actuated by the secondary brake actuating device 3. When the bowden cable is actuated by the secondary brake actuating device 3 and the lever 41" is pulled by the bowden cable towards the secondary brake actuating device 3, the one gear wheel 44 pivots to move the respective pivot arm 43 towards the transfer element 5. Simultaneously, the other gear wheel 44 driven by the one gear wheel moves the other pivot arm 43 symmetrically towards the transfer element. Here, the end face of the transfer element 5 provides an enlarged engagement surface to allow an early contact of the pivot arms 43 with the transfer element 5. The lengths of the pivot arms are configured to move and/or hold the transfer element 5 in the at least one braking position. Specifically, the present embodiment provides the at least one braking position to be achieved before the pivot arms 43 are orientated perpendicular to the end face of the transfer element 5. Therefore, the lever mechanism 4b" is capable of readjusting the at least one braking position in the event of cooled down brakes or wear.

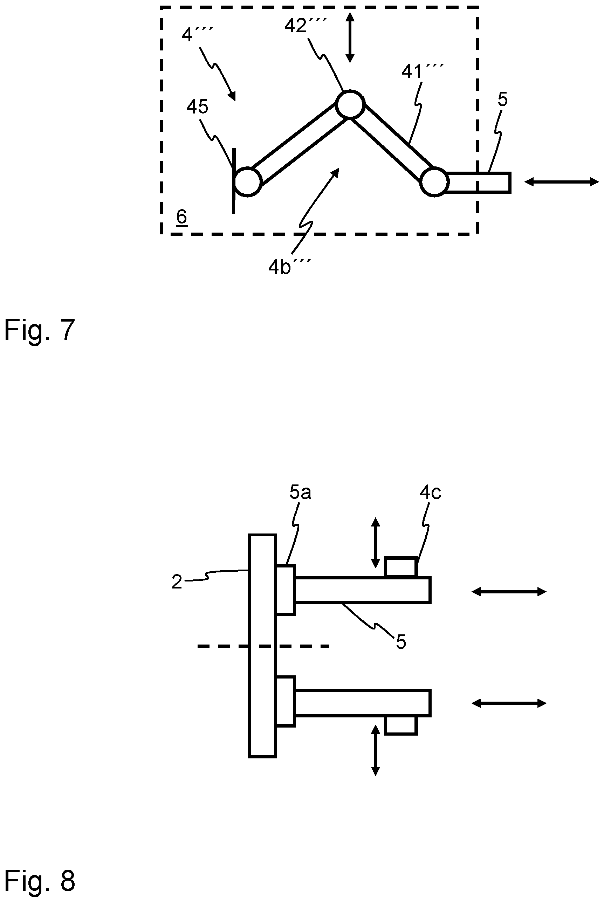

**Fig. 7** is a schematic view of a braking system according to a fourth exemplary embodiment. The fourth embodiment differs from the third embodiment in the configuration of the lever mechanism and the respective actuation of the transfer element 5. In the fourth embodiment, the lever mechanism 4b‴ of the secondary brake actuator 4‴ comprises a toggle lever 41‴ with a respective pivot 42‴. The one end of the toggle lever 41‴ is connected to the transfer element 5 and the other end of the toggle lever 41‴ rests against a stop 45. An actuation of the lever mechanism 4b‴ is indicated by the bidirectional arrow. If the toggle lever 41‴ is expanded, i.e. the distance between the respective ends of the toggle lever 41‴ is increased, the transfer element 5 is moved and/or held in the at least one braking position. Here, the at least one braking position of the transfer element 5 corresponds to a state of the toggle lever 41‴ before reaching its dead center. Therefore, the lever mechanism 4b‴ is capable of readjusting the at least one braking position in the event of cooled down brakes or wear.

**Fig. 8** is a schematic view of a braking system according to a fifth exemplary embodiment. In the fifth embodiment, the braking system comprises two transfer elements 5 to apply a braking force on a brake 2, in particular a brake pad. However, in alternative embodiments, the braking system comprises only one or more than two transfer elements 5. Each of the transfer elements 5 comprises a braking member 5a to directly act on the brake 2. However, in alternative embodiments, the transfer elements 5 may indirectly act on the brake 2 by applying a respective force to intermediate members operatively arranged between the respective transfer element 5 and the brake 2. The secondary brake actuator according to the fifth embodiment comprises a friction member 4c configured to engage a radial surface of the transfer element 5 to hold the transfer element in the at least one braking position. Accordingly, the friction members 4c are movable perpendicular to the moving direction of the transfer element 5 between an engagement position to apply a holding force and a non-engagement position to allow a movement of the transfer element 5 as indicated by the vertical bidirectional arrow. The friction member 4c is biased to allow a readjustment of a respective engagement position to compensate for tolerances or wear. However, in alternative embodiments, the readjustment may be provided by other elements of the secondary brake actuator or by the secondary brake actuating device. The transfer element 5 is moved in the at least one braking position by the main brake actuator 7, as indicated by the horizontal bidirectional arrow, to be held by the friction member 4c when actuated by the secondary brake actuator accordingly. Thus, the main brake actuator 7 of the fifth embodiment is configured to move the transfer element 5 in the at least one braking position during a driving operation as well as a non-driving operation. With respect to the present embodiment, the actuation of the friction member 4c is configured to provide a sufficient holding force to hold the transfer element in the at least one braking position even after deactivation of the main brake actuator 7. However, in alternative embodiments, the main brake actuator may be further activated.

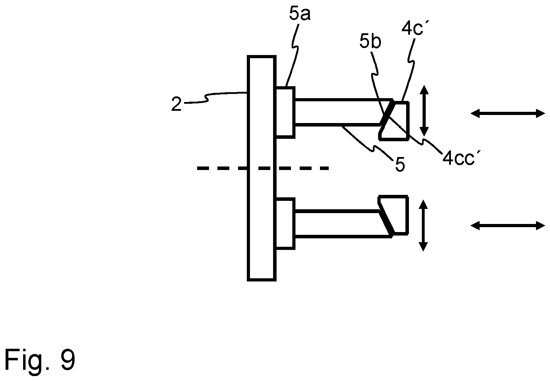

**Fig. 9** is a schematic view of a braking system according to a sixth exemplary embodiment. The sixth embodiment differs from the fifth embodiment in the configuration of the friction member and the respective holding characteristic of the transfer element 5. Similar to the fifth embodiment, the braking system comprises two transfer elements 5 to apply a braking force on the brake 2. As the operating mechanism for each of the transfer elements 5 is equal, the following description only refers to one of the transfer elements 5. Here, the secondary brake actuator comprises a friction member 4c' configured to hold the transfer element 5 in the at least one braking position when respectively actuated. The friction member 4c' comprises a wedge surface 4cc' facing an end face of the transfer element 5 opposite to the braking member 5a. The end face of the transfer element 5 is inclined with respect to a plane perpendicular to the moving direction of the transfer element 5, indicated by the horizontal bidirectional arrow. The inclination of the end face of the transfer element 5 corresponds to the inclination of the wedge surface 4cc' to provide a contact area between the end face of the transfer element and the wedge surface 4cc' when the wedge surface 4cc' is moved against the inclined end face of the transfer element 5, as indicated by the vertical bidirectional arrow. Due to the wedge surface 4cc' the friction member 4c' is capable of readjusting the at least one braking position in the event of a cooling down of the brake 2 or wear. The friction member 4c' is therefore biased to stay in contact with the inclined end face of the transfer element 5 when holding the transfer element 5 in the at least one braking position.

It is to be noted that the given examples are specific embodiments and not intended to restrict the scope of protection given in the claims. In particular, single features of one embodiment may be combined with another embodiment.

### LIST OF REFERENCE SIGNS

- 1: wheel
- 2: brake
- 3: secondary brake actuating device
- 4, 4', 4", 4‴: secondary brake actuator
- 4a: length adjustable portion
- 4b', 4b", 4b‴: lever mechanism
- 4c, 4c': friction member
- 4cc': wedge surface
- 5: transfer element
- 5a: braking member (transfer element)
- 5b: engagement portion
- 6: housing
- 7: main brake actuator
- 41': tilting lever
- 41": lever
- 41‴: lever (toggle lever)
- 42', 42", 42‴: pivot
- 43: pivot arm
- 44: gear wheel
- 45: stop
- R₁, R₂, R₃: spring rate

## Claims

1. Braking system for a commercial vehicle, comprising:
a transfer element (5) movable between at least one braking position to apply a braking force on a brake (2) and a release position,
a main brake actuator (7) configured to move the transfer element (5) into the at least one braking position, and
a secondary brake actuator (4, 4', 4", 4"') configured to move the transfer element (5) into the at least one braking position and/or to hold the transfer element (5) in the at least one braking position,
wherein the secondary brake actuator (4) is connected to the transfer element (5),
**characterized in that**
the secondary brake actuator (4) comprises a length adjustable portion (4a) configured to be at least partially compressed when the main brake actuator (7) and the secondary brake actuator (4) are activated, and configured to be at least partially decompressed when at least one of the main brake actuator (7) and the secondary brake actuator (4) is deactivated.

2. Braking system according to claim 1, wherein
the main brake actuator (7) is configured to move the transfer element (5) in the at least one braking position when activated, and/or
the secondary brake actuator (4, 4', 4", 4‴) is configured to move and/or hold the transfer element (5) in the at least one braking position when deactivated.

3. Braking system according to claim 1 or 2, wherein the secondary brake actuator (4, 4', 4", 4‴) is actuated by a secondary brake actuating device (3), preferably a pre-loaded actuator, in particular by a spring-loaded actuator, comprised by the secondary brake actuating device (3), wherein the secondary brake actuating device (3) is preferably configured to actuate more than one secondary brake actuator (4, 4', 4", 4"').

4. Braking system according to any one of the preceding claims, wherein the secondary brake actuator (4, 4', 4", 4‴) comprises a cable control, in particular bowden cable.

5. Braking system according any one of the preceding claims, wherein the length adjustable portion (4a) is a spring portion.

6. Braking system according to any one of the preceding claims, wherein the length adjustable portion (4a) is configured to provide a force corresponding to spring rate R₃, the secondary brake actuator (4) and/or the secondary brake actuating device (3) is or are configured to provide a force corresponding to spring rate R₁, and the main brake actuator (7) is configured to provide a force corresponding to spring rate R₂, wherein R₁ is greater than R₂ and R₂ is greater than R₃.

7. Braking system according to any one of the preceding claims, wherein the secondary brake actuator (4) comprises a lever mechanism (4b', 4b", 4b‴) configured to move the transfer element (5) into the at least one braking position and/or to hold the transfer element (5) in the at least one braking position.

8. Braking system according to claim 7, wherein the lever mechanism (4b') comprises a lever (41'), in particular a tilting lever or a rotating lever, configured to provide an application of force, preferably centrally, to the transfer element (5).

9. Braking system according to claim 7 or 8, wherein the lever mechanism (4b") comprises a control slide mechanism, in particular at least two sliders, preferably at least two pivot arms (43), symmetrically pivotable and/or displaceable, configured to move the transfer element (5) into the at least one braking position and/or to hold the transfer element (5) in the at least one braking position.

10. Braking system according any one of the claims 7 to 9, wherein the lever mechanism (4b‴) comprises a transmission mechanism configured to convert an initial force initiated by the secondary brake actuating device (3) according to claim 3 in an actuation force to be applied to the transfer element (5) with a transmission ratio of more than one, preferably with a progressively increasing transmission ratio, in particular a toggle lever (41‴).

11. Braking system according to any one of the preceding claims, wherein the secondary brake actuator (4) comprises or acts on a friction member (4c, 4c') configured to frictionally engage with the transfer element (5).

12. Braking system according to claim 11, wherein the friction member (4c) is configured to provide a frictional engagement with a radial surface of the transfer element (5) with respect to a moving direction of the transfer element (5).

13. Braking system according to claim 11, wherein an engagement portion (5b) of the transfer element (5) for the friction member (4c') is inclined with respect to a plane perpendicular to a moving direction of the transfer element (5) and the friction member (4c') forms a corresponding wedge surface configured to provide a frictional engagement with the inclined engagement portion (5b) of the transfer element (5).

14. Method for controlling a braking system according to any one of the preceding claims to apply a braking force to a brake (2) of a commercial vehicle, comprising the steps of
activating the main brake actuator (7) to move the transfer element (5) in a braking position to apply the braking force to the brake (2) and
holding the transfer element (5) in the braking position by the secondary brake actuator (4, 4', 4", 4‴), preferably independent of a further activation of the main brake actuator (7).

15. Commercial vehicle, in particular an electric driven or hybrid vehicle, comprising a braking system according to any one of the claims 1 to 13 and/or a control device configured to execute the method according to claim 14.

## Patentansprüche

1. Bremssystem für ein Nutzfahrzeug, umfassend:
ein Übertragungselement (5), welches zwischen zumindest einer Bremsposition zum Anwenden einer Bremskraft auf eine Bremse (2) und einer Freigabeposition beweglich ist,
einen Hauptbremsaktuator (7), welcher dazu konfiguriert ist, das Übertragungselement (5) in die zumindest eine Bremsposition zu bewegen, und
einen sekundären Bremsaktuator (4, 4', 4", 4"'), welcher dazu konfiguriert ist, das Übertragungselement (5) in die zumindest eine Bremsposition zu bewegen und/oder das Übertragungselement (5) in der zumindest einen Bremsposition zu halten,
wobei der sekundäre Bremsaktuator (4) mit dem Übertragungselement (5) verbunden ist,
**dadurch gekennzeichnet, dass**
der sekundäre Bremsaktuator (4) einen längenverstellbaren Abschnitt (4a) umfasst, welcher so konfiguriert ist, dass er zumindest teilweise komprimiert wird, wenn der Hauptbremsaktuator (7) und der sekundäre Bremsaktuator (4) aktiviert werden, und so konfiguriert ist, dass er zumindest teilweise dekomprimiert wird, wenn zumindest einer von dem Hauptbremsaktuator (7) und dem sekundären Bremsaktuator (4) deaktiviert wird.

2. Bremssystem nach Anspruch 1, wobei
der Hauptbremsaktuator (7) dazu konfiguriert ist, bei Aktivierung das Übertragungselement (5) in die zumindest eine Bremsposition zu bewegen, und/oder
der sekundäre Bremsaktuator (4, 4', 4", 4"') dazu konfiguriert ist, bei Deaktivierung das Übertragungselement (5) in die zumindest eine Bremsposition zu bewegen und/oder dort zu halten.

3. Bremssystem nach Anspruch 1 oder 2, wobei der sekundäre Bremsaktuator (4, 4', 4", 4"') durch eine sekundäre Bremsbetätigungsvorrichtung (3), bevorzugt einen vorgespannten Aktuator, insbesondere durch einen federbelasteten Aktuator, betätigt wird, welche aus der sekundären Bremsbetätigungsvorrichtung (3) besteht, wobei die sekundäre Bremsbetätigungsvorrichtung (3) bevorzugt dazu konfiguriert ist, mehr als einen sekundären Bremsaktuator (4, 4', 4", 4"') zu betätigen.

4. Bremssystem nach einem der vorstehenden Ansprüche, wobei der sekundäre Bremsaktuator (4, 4', 4", 4"') einen Seilzug, insbesondere Bowdenzug, umfasst.

5. Bremssystem nach einem der vorstehenden Ansprüche, wobei der längenverstellbare Abschnitt (4a) ein Federabschnitt ist.

6. Bremssystem nach einem der vorstehenden Ansprüche, wobei der längenverstellbare Abschnitt (4a) dazu konfiguriert ist, eine Kraft bereitzustellen, welche der Federrate R₃ entspricht, wobei der sekundäre Bremsaktuator (4) und/oder die sekundäre Bremsbetätigungsvorrichtung (3) dazu konfiguriert ist bzw. sind, eine Kraft bereitzustellen, welcher der Federrate R₁ entspricht, und der Hauptbremsaktuator (7) dazu konfiguriert ist, eine Kraft bereitzustellen, welche der Federrate R₂ entspricht, wobei R₁ größer als R₂ ist und R₂ größer als R₃ ist.

7. Bremssystem nach einem der vorstehenden Ansprüche, wobei der sekundäre Bremsaktuator (4) einen Hebelmechanismus (4b', 4b", 4b'") umfasst, welcher dazu konfiguriert ist, das Übertragungselement (5) in die zumindest eine Bremsposition zu bewegen, und/oder das Übertragungselement (5) in der zumindest einen Bremsposition zu halten.

8. Bremssystem nach Anspruch 7, wobei der Hebelmechanismus (4b') einen Hebel (41'), insbesondere einen Kipphebel oder einen Drehhebel umfasst, welcher dazu konfiguriert ist, eine Anwendung von Kraft, bevorzugt auf das Übertragungselement (5), bereitzustellen.

9. Bremssystem nach Anspruch 7 oder 8, wobei der Hebelmechanismus (4b") einen Steuerschiebemechanismus, insbesondere zumindest zwei Schieber, bevorzugt zumindest zwei Schwenkarme (43), umfasst, welche symmetrisch schwenkbar und/oder verschiebbar sind, dazu konfiguriert, das Übertragungselement (5) in die zumindest eine Bremsposition zu bewegen und/oder das Übertragungselement (5) in der zumindest einen Bremsposition zu halten.

10. Bremssystem nach einem der Ansprüche 7 bis 9, wobei der Hebelmechanismus (4b‴) einen Übertragungsmechanismus umfasst, welcher dazu konfiguriert ist, eine von der sekundären Bremsbetätigungsvorrichtung (3) nach Anspruch 3 eingeleitete Anfangskraft in eine auf das Übertragungselement (5) anzuwendende Betätigungskraft mit einem Übertragungsverhältnis größer als eins, bevorzugt mit einem progressiv ansteigenden Übertragungsverhältnis umzuwandeln, insbesondere einen Kniehebel (41‴).

11. Bremssystem nach einem der vorstehenden Ansprüche, wobei der sekundäre Bremsaktuator (4) ein Reibelement (4c, 4c') umfasst oder auf ein solches einwirkt, welches so konfiguriert ist, dass es mit dem Übertragungselement (5) in Reibungseingriff steht.

12. Bremssystem nach Anspruch 11, wobei das Reibelement (4c) dazu konfiguriert ist, einen Reibungseingriff mit einer radialen Oberfläche des Übertragungselements (5) in Bezug auf eine Bewegungsrichtung des Übertragungselements (5) bereitzustellen.

13. Bremssystem nach Anspruch 11, wobei ein Eingriffsabschnitt (5b) des Übertragungselements (5) für das Reibelement (4c') in Bezug auf eine Ebene geneigt ist, welche senkrecht zu einer Bewegungsrichtung des Übertragungselements (5) steht, und das Reibelement (4c') eine entsprechende Keilfläche bildet, welche dazu konfiguriert ist, einen Reibungseingriff mit dem geneigten Eingriffsabschnitt (5b) des Übertragungselements (5) bereitzustellen.

14. Verfahren zum Steuern eines Bremssystems nach einem der vorstehenden Ansprüche, um eine Bremskraft auf eine Bremse (2) eines Nutzfahrzeugs anzuwenden, umfassend die Schritte
Aktivieren des Hauptbremsaktuators (7), um das Übertragungselement (5) in eine Bremsposition zu bewegen, um die Bremskraft auf die Bremse (2) anzuwenden, und
Halten des Übertragungselements (5) in der Bremsposition durch den sekundären Bremsaktuator (4, 4', 4", 4‴), bevorzugt unabhängig von einer weiteren Aktivierung des Hauptbremsaktuators (7).

15. Nutzfahrzeug, insbesondere ein elektrisch betriebenes oder Hybridfahrzeug, umfassend ein Bremssystem nach einem der Ansprüche 1 bis 13 und/oder eine Steuervorrichtung, welche dazu konfiguriert ist, das Verfahren nach Anspruch 14 auszuführen.

## Revendications

1. Système de freinage pour un véhicule utilitaire, comprenant :
un élément de transfert (5) mobile entre au moins une position de freinage pour appliquer une force de freinage sur un frein (2) et une position de libération,
un actionneur de frein principal (7) configuré pour déplacer l'élément de transfert (5) dans la au moins une position de freinage, et
un actionneur de frein secondaire (4, 4', 4", 4"') configuré pour déplacer l'élément de transfert (5) dans la au moins une position de freinage et/ou pour maintenir l'élément de transfert (5) dans la au moins une position de freinage,
dans lequel l'actionneur de frein secondaire (4) est raccordé à l'élément de transfert (5),
**caractérisé en ce que**
l'actionneur de frein secondaire (4) comprend une partie réglable en longueur (4a) configurée pour être au moins partiellement compressée lorsque l'actionneur de frein principal (7) et l'actionneur de frein secondaire (4) sont activés, et configurée pour être au moins partiellement décompressée lorsqu'au moins l'un de l'actionneur de frein principal (7) et de l'actionneur de frein secondaire (4) est désactivé.

2. Système de freinage selon la revendication 1, dans lequel
l'actionneur de frein principal (7) est configuré pour déplacer l'élément de transfert (5) dans la au moins une position de freinage lorsqu'il est activé, et/ou
l'actionneur de frein secondaire (4, 4', 4", 4‴) est configuré pour se déplacer et/ou maintenir l'élément de transfert (5) dans la au moins une position de freinage lorsqu'il est désactivé.

3. Système de freinage selon la revendication 1 ou 2, dans lequel l'actionneur de frein secondaire (4, 4', 4", 4‴) est actionné par un dispositif d'actionnement de frein secondaire (3), de préférence un actionneur préchargé, en particulier par un actionneur à ressort, constitué du dispositif d'actionnement de frein secondaire (3), dans lequel le dispositif d'actionnement de frein secondaire (3) est, de préférence, configuré pour actionner plus d'un actionneur de frein secondaire (4, 4', 4", 4‴).

4. Système de freinage selon l'une quelconque des revendications précédentes, dans lequel l'actionneur de frein secondaire (4, 4', 4", 4"') comprend une commande par câble, en particulier un câble Bowden.

5. Système de freinage selon l'une quelconque des revendications précédentes, dans lequel la partie réglable en longueur (4a) est une partie ressort.

6. Système de freinage selon l'une quelconque des revendications précédentes, dans lequel la partie réglable en longueur (4a) est configurée pour fournir une force correspondant à la raideur du ressort R₃, l'actionneur de frein secondaire (4) et/ou le dispositif d'actionnement de frein secondaire (3) est ou sont configurés pour fournir une force correspondant à la raideur du ressort R₁ et l'actionneur de frein principal (7) est configuré pour fournir une force correspondant à la raideur du ressort R₂, dans lequel R₁ est supérieur à R₂ et R₂ est supérieur à R₃.

7. Système de freinage selon l'une quelconque des revendications précédentes, dans lequel l'actionneur de frein secondaire (4) comprend un mécanisme à levier (4b', 4b", 4b'") configuré pour déplacer l'élément de transfert (5) dans la au moins une position de freinage et/ou pour maintenir l'élément de transfert (5) dans la au moins une position de freinage.

8. Système de freinage selon la revendication 7, dans lequel le mécanisme à levier (4b') comprend un levier (41'), en particulier un levier basculant ou un levier rotatif, configuré pour fournir une application de force, de préférence de manière centrale, à l'élément de transfert (5).

9. Système de freinage selon la revendication 7 ou 8, dans lequel le mécanisme à levier (4b") comprend un mécanisme à coulisse de commande, en particulier au moins deux coulisseaux, de préférence au moins deux bras pivotants (43), pouvant pivoter et/ou être déplacés de manière symétrique, configuré pour déplacer l'élément de transfert (5) dans la au moins une position de freinage et/ou pour maintenir l'élément de transfert (5) dans la au moins une position de freinage.

10. Système de freinage selon l'une quelconque des revendications 7 à 9, dans lequel le mécanisme à levier (4b"") comprend un mécanisme de transmission configuré pour convertir une force initiale initiée par le dispositif d'actionnement de frein secondaire (3) selon la revendication 3 en une force d'actionnement à appliquer à l'élément de transfert (5) avec un rapport de transmission supérieur à un, de préférence avec un rapport de transmission progressivement croissant, en particulier un levier à bascule (41").

11. Système de freinage selon l'une quelconque des revendications précédentes, dans lequel l'actionneur de frein secondaire (4) comprend, ou agit sur, un élément de friction (4c, 4c') configuré pour venir en prise par friction avec l'élément de transfert (5).

12. Système de freinage selon la revendication 11, dans lequel l'élément de friction (4c) est configuré pour fournir une mise en prise par friction avec une surface radiale de l'élément de transfert (5) par rapport à une direction de déplacement de l'élément de transfert (5).

13. Système de freinage selon la revendication 11, dans lequel une partie de mise en prise (5b) de l'élément de transfert (5) pour l'élément de friction (4c') est inclinée par rapport à un plan perpendiculaire à une direction de déplacement de l'élément de transfert (5) et l'élément de friction (4c') forme une surface de coin correspondante configurée pour fournir une mise en prise par friction avec la partie de mise en prise inclinée (5b) de l'élément de transfert (5).

14. Procédé de commande d'un système de freinage selon l'une quelconque des revendications précédentes pour appliquer une force de freinage à un frein (2) d'un véhicule utilitaire, comprenant les étapes consistant à
activer l'actionneur de frein principal (7) pour déplacer l'élément de transfert (5) dans une position de freinage pour appliquer la force de freinage au frein (2) et
maintenir l'élément de transfert (5) dans la position de freinage par l'actionneur de frein secondaire (4, 4', 4", 4'"), de préférence indépendamment d'une activation supplémentaire de l'actionneur de frein principal (7).

15. Véhicule utilitaire, en particulier véhicule électrique ou hybride, comprenant un système de freinage selon l'une quelconque des revendications 1 à 13 et/ou un dispositif de commande configuré pour exécuter le procédé selon la revendication 14.
